# EUROPEAN PATENT APPLICATION

(11) **EP 2 348 354 A1**
(43) Date of publication of application: **27.07.2011**
(21) Application number: 09827499.6
(22) Date of filing: 11.11.2009
(51) Int. Cl.: G02F 1/1337

(54) **ORIENTED FILM MATERIAL DRIPPING METHOD AND DRIPPING DEVICE**

(30) Priority: 21.11.2008 JP 2008297519
(71) Applicant: Sharp Kabushiki Kaisha, Osaka-shi, Osaka 545-8522 (JP)
(72) Inventor: OBATA, Taichi, Osaka-shi Osaka 545-8522 (JP); KANBE, Makoto, Osaka-shi Osaka 545-8522 (JP)
(74) Representative: Müller - Hoffmann & Partner
(86) International application number: PCT/JP2009/069150
(87) International publication number: WO 2010/058718

(57) **Abstract**

Droplet ejection method and device capable of preventing a line defect, which results from a defective nozzle that ejects an inappropriate amount of droplet and is included in nozzles of an ink-jet head, from developing to appear as a visible defect in image display of a liquid crystal display panel. When adjacent streams of droplets of alignment material that are formed by movements in a Y-direction of the ink-jet head join together to form an alignment film on a substrate, a shift amount in an X-direction of the ink-jet head is set such that the adjacent streams are formed by the different nozzles. Thus, the streams of the droplets ejected from the defective nozzle can be prevented from being formed adjacent to each other, and portions of the alignment film that have thicknesses smaller than the other portions, which result in line defects, do not gather together but are dispersed.

## Description

### Technical Field

The present invention relates to a method and a device for ejecting droplets of alignment material onto a substrate for a liquid crystal display panel by an ink-jet method.

### Background Art

In recent years, a liquid crystal display panel is in widespread use as a display unit of a household electrical appliance such as a computer and a television. The liquid crystal display panel usually includes a pair of a thin film transistor (TFT) array substrate and a color filter (CF) substrate. The TFT array substrate and the CF substrate are opposed parallel to each other leaving a given small gap therebetween. Liquid crystals are filled between the substrates. A plurality of pixel electrodes are formed in a matrix on the TFT array substrate. A common electrode is formed almost entirely on the CF substrate. Alignment of the liquid crystals is controlled by changing voltages applied to the electrodes.

Usually, the pixel electrodes and the common electrode are each coated with alignment films made from organic materials in order to bring the liquid crystals into alignment. Examples of a method for forming these alignment films on the substrates including the electrodes include a method for forming thin films on substrates by transferring alignment materials to the substrates with the use of a rotating roller, and a method for forming thin films on substrates by ejecting droplets of alignment materials onto the substrates with the use of an ink-jet head as shown in Fig. 9 (see PTL 1).

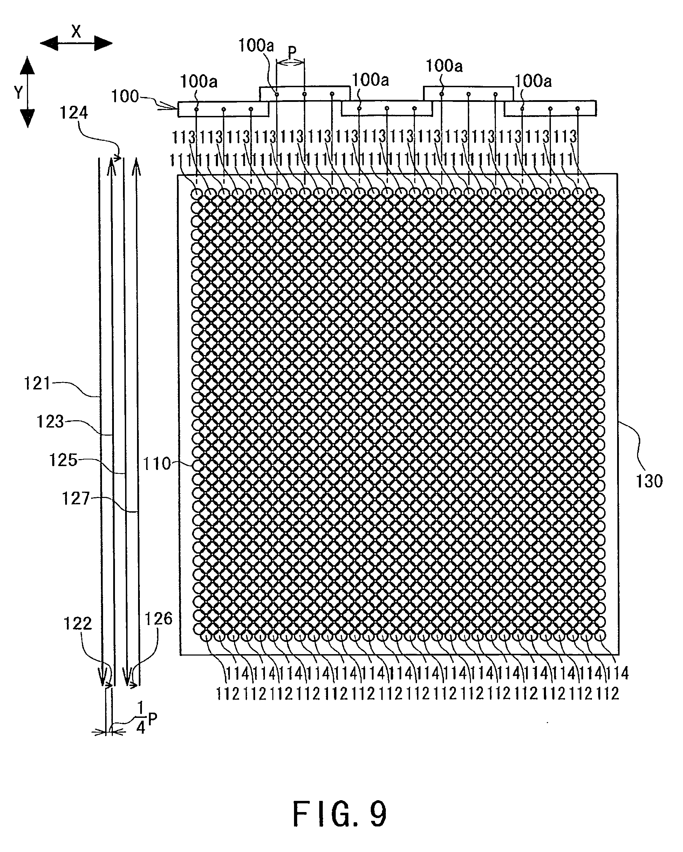

As shown in Fig. 9, ink-jet heads 100 are arranged staggered, and each ink-jet head 100 includes a plurality of nozzles 100a that are aligned at a predetermined pitch P along the X-direction. The ink-jet heads 100 are capable of ejecting droplets 110 of alignment material in succession from their nozzles 100a while being moved in the Y-direction relative to a substrate 130.

The droplets 110 of alignment material that are ejected from the nozzles 100a spread on the substrate 130 at the moment of landing. Contacting one another, the adjacent droplets 110 join together to be united and take the form of a single thin film in which the alignment material is uniformly spread on the substrate 130. Then, the droplets 110 undergo a predetermined process such as a drying process to remove a solvent or substance other than the alignment material contained in the droplets 110. Thus, an alignment film having a given thickness is formed on the substrate 130.

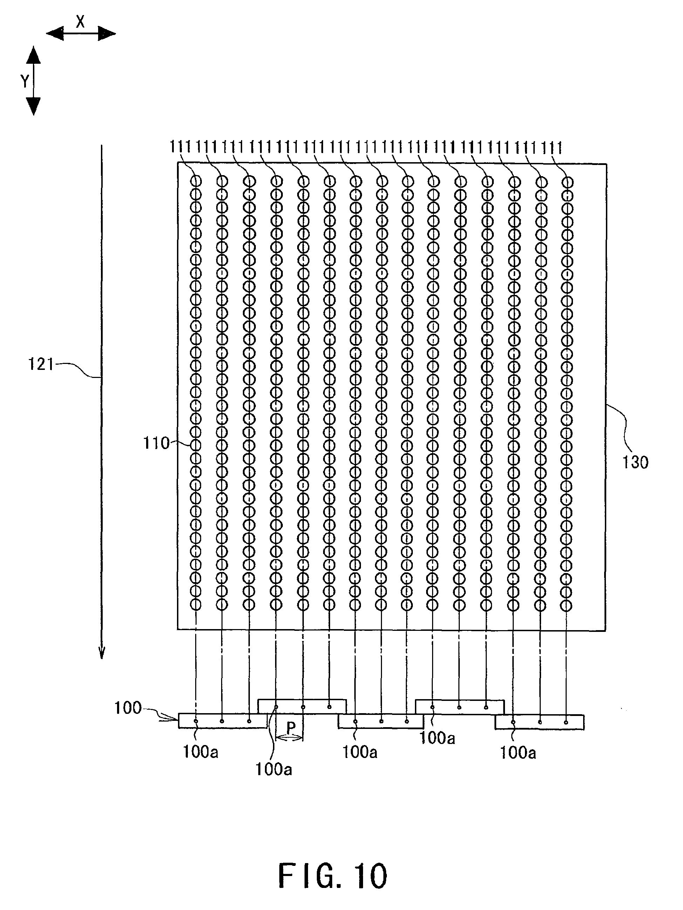

The pitch P, which defines a distance between the adjacent nozzles 100a, is several hundred µm, so that the droplets 110 of alignment material that are ejected from the adjacent nozzles 100a do not overlap one another as shown in Fig. 10. In order that the adjacent droplets 110 join together to be united, the nozzles 100a are shifted in an aligned-nozzle direction (the X-direction) by a half to quarter length of the pitch P (by a half to quarter pitch) each time one movement in the Y-direction of the ink-jet heads 100 is finished, where a plurality of movements in the Y-direction of the ink-jet heads 100 are performed.

For example, assuming that the pitch P is 800 µm and the ink-jet heads 100 are shifted in the X-direction by 200 µm, which is a quarter length of the pitch P, four movements in the Y-direction of the ink-jet heads 100 for droplet ejection should be performed. The process of the droplet ejection in this example will be explained.

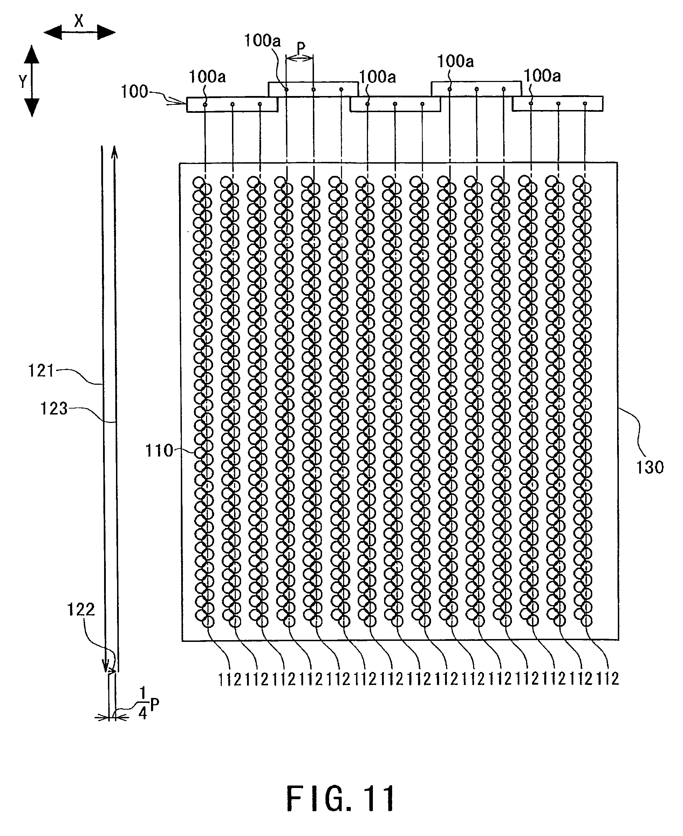

As shown in Fig. 10, the first movement in the Y-direction of the ink-jet heads 100 is made downward, which is indicated by the arrow 121, and the continuous droplets 110 of alignment material form streams 111 in the Y-direction on the substrate 130. Then, as shown in Fig. 11, after the ink-jet heads 100 are shifted rightward in the X-direction by the quarter length of the pitch P (by the quarter pitch), which is indicated by the arrow 122, the second movement in the Y-direction of the ink-jet heads 100 is made upward, which is indicated by the arrow 123, and the droplets 110 of alignment material form streams 112 on the substrate 130.

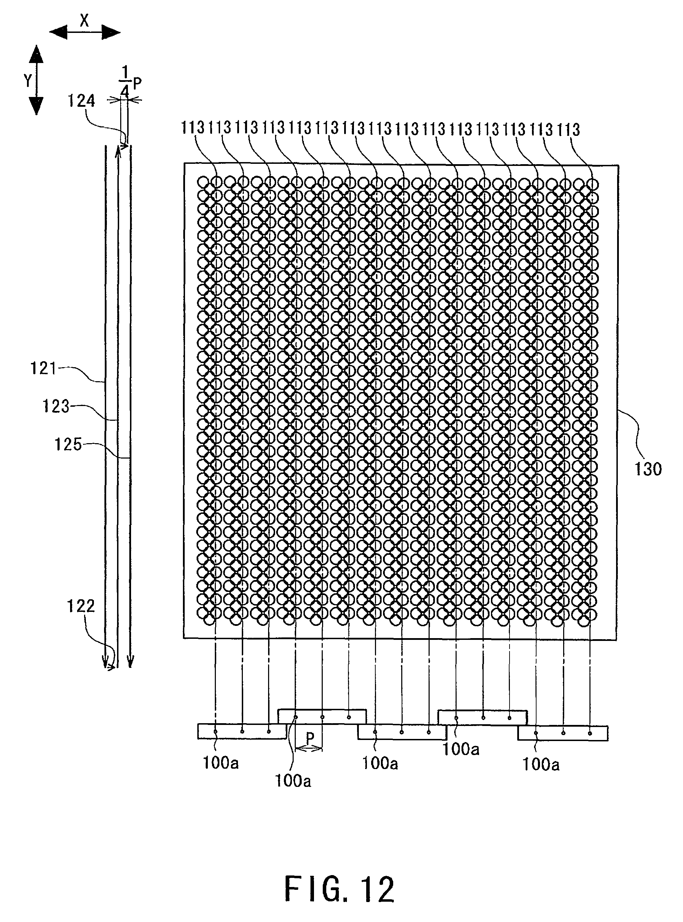

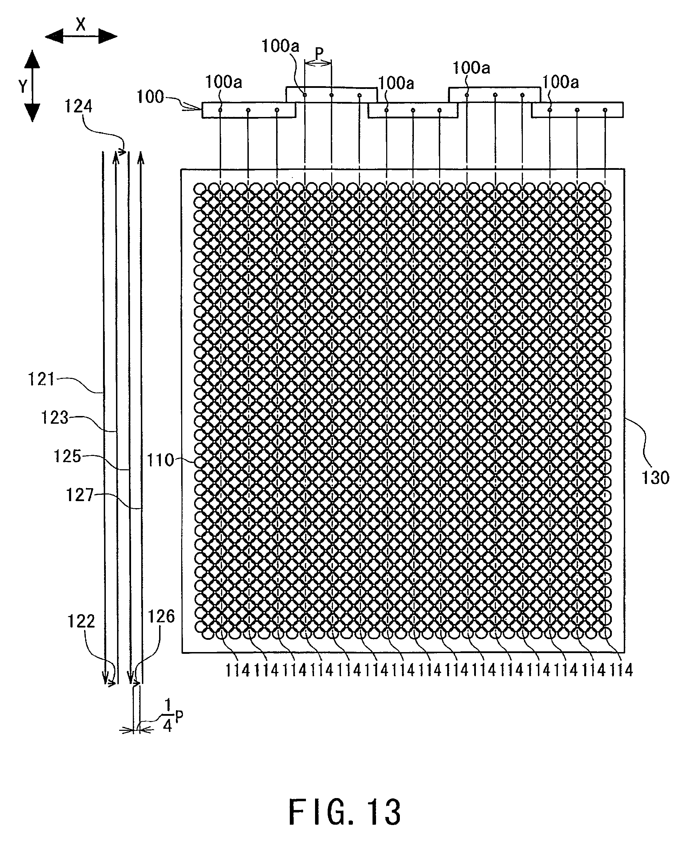

Then, as shown in Fig. 12, after the ink-jet heads 100 are shifted rightward in the X-direction by the quarter length of the pitch P, which is indicated by the arrow 124, the third movement in the Y-direction of the ink-jet heads 100 is made downward, which is indicated by the arrow 125, and the droplets 110 of alignment material form streams 113 on the substrate 130. Then, as shown in Fig. 13, after the ink-jet heads 100 are shifted rightward in the X-direction by the quarter length of the pitch P, which is indicated by the arrow 126, the fourth movement in the Y-direction of the ink-jet heads 100 is made upward, which is indicated by the arrow 127, and the droplets 110 of alignment material form streams 114 on the substrate 130.

In other words, in order to fill the gaps between the streams 111 of the droplets 110 of alignment material that are formed on the substrate 130 by the first movement in the Y-direction of the ink-jet heads 100 (indicated by the arrow 121) on the substrate 130 as shown in Fig. 10, the second, third and fourth movements in the Y-direction of the ink-jet heads 100 (indicated by the arrows 123, 125, 127) are made while the ink-jet heads 100 are gradually shifted in the X-direction by the predetermined lengths (quarter pitches) (indicated by the arrows 122, 124, 126) . Thus, the formed adjacent streams 111, 112, 113 and 114 of the droplets 110 of alignment material join together, whereby the droplets 110 are united as shown in Fig. 9.

The droplets 110, which are united by the joining adjacent streams 111, 112, 113 and 114 that are made by the two reciprocating movements in the Y-direction of the ink-jet heads 100 on the substrate 130 with the ink-jet heads 100 shifted gradually in the X-direction, undergo a drying process, and take the form of a single thin film on the substrate 130, which defines an alignment film.

### Citation List

### Patent literature

PTL 1: JP 2001-42330 A

### Summary of Invention

### Technical problem

However, there are problems such that some of the nozzles 100a of the ink-jet heads 100 are clogged or such that variations in precision of droplet ejection of the nozzles 100a are exhibited, so that the amounts of the droplets 110 ejected from those defective nozzles 100a could be smaller or larger than the others.

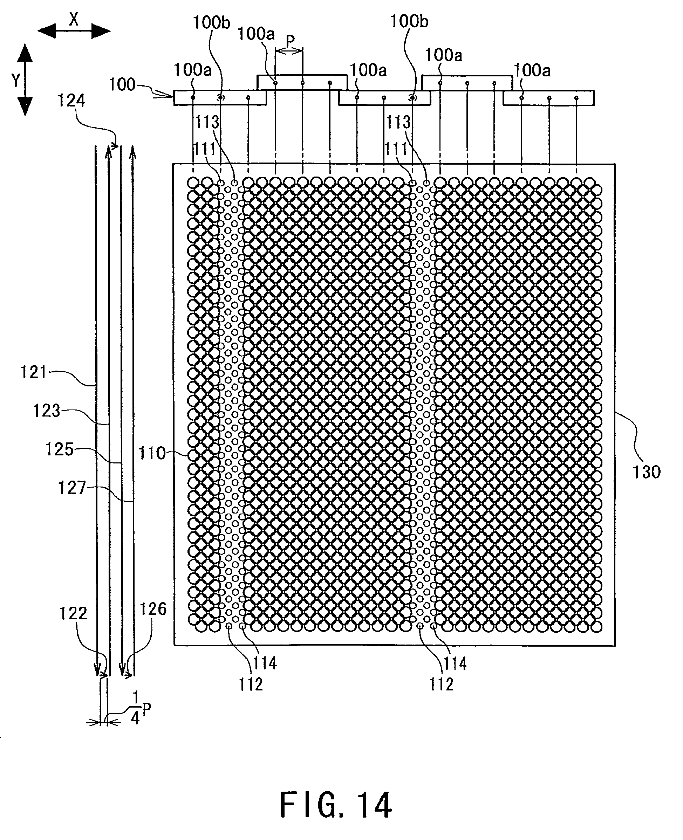

When the streams 111, 112, 113 and 114 of the droplets 110 of alignment material are formed by the two reciprocating movements in the Y-direction of the ink-jet heads 100 with the ink-jet heads 100 shifted gradually in the X-direction as described above while the nozzles 100a include such defective nozzles that eject the droplets 110 of inappropriate amounts as described above, the streams 111, 112, 113 and 114 of the droplets 110 of alignment material that are ejected from defective nozzles 100b (circled with dotted lines in Fig. 14) that eject the droplets 110 of inappropriate amounts are formed adjacent to each other as shown in Fig. 14. Because the amounts of the droplets 110 of these streams are all smaller than the others as shown in Fig. 14, the amounts of the alignment material in these streams are smaller than the others.

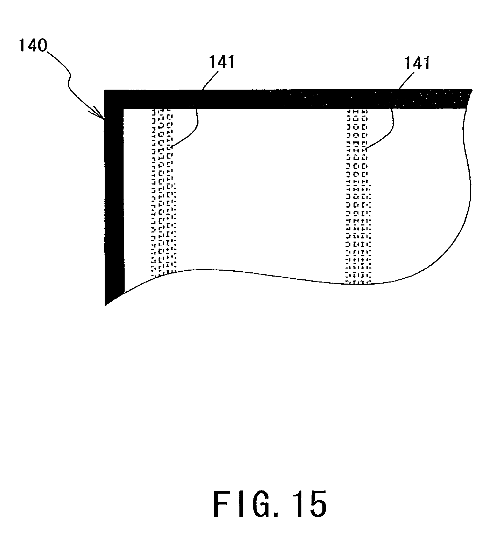

When a substrate that includes portions on which the amounts of alignment material are inappropriate as described above undergoes a predetermined process such as a drying process, portions of an alignment film formed on the substrate that have thicknesses smaller than the other portions, which result in line defects, gather together to develop to appear as visible defects 141 in image display of a liquid crystal display panel 140 as shown in Fig. 15.

The substrate that has the portions on which the amounts of the droplets of alignment material are inappropriate may be left standing for a given length of time or vibrated until the inappropriate amounts of the droplets of alignment material on the portions and the appropriate amounts of the droplets of alignment material on the other portions become uniform. However, such an additional process increases the number of the production processes, which causes an increase in production cost.

An object of the present invention is to overcome the problems described above and to provide a method and a device for ejecting droplets of alignment material, which are capable of preventing, even when nozzles of ink-jet heads include a defective nozzle that ejects a droplet of an inappropriate amount, a visible defect resulting from the defective nozzle from appearing in image display of a liquid crystal display panel.

In order to overcome the problems described above, preferred embodiments of the present invention provide a method and a device for ejecting droplets of material for liquid crystal alignment onto a substrate for a liquid crystal display panel having a square or rectangular shape from nozzles of an ink-jet head while moving the ink-jet head in a Y-direction with respect to the substrate, and forming thereby an alignment film on the substrate, wherein the nozzles are aligned at a predetermined pitch along an X-direction of the ink-jet head, wherein the Y-direction defines a moving direction of the ink-jet head for droplet ejection and the X-direction defines a direction perpendicular to the moving direction, the method comprising the steps of forming streams of the droplets of alignment material on the substrate by a movement in the Y-direction of the ink-jet head, shifting the ink-jet head in the X-direction by a predetermined shift amount, forming streams of the droplets of alignment material on the substrate by a movement in the Y-direction of the shifted ink-jet head such that gaps between the streams formed by the preceding movement are filled, repeating shifting the ink-jet head in the X-direction by the predetermined shift amount and forming streams of the droplets of alignment material on the substrate by a movement in the Y-direction of the shifted ink-jet head such that gaps between the streams formed by the preceding movements in the Y-direction of the ink-jet head are filled, and forming thereby the alignment film on the substrate, wherein the shift amount in the X-direction of the ink-jet head is set such that the adjacent streams of the droplets that are formed by the movements in the Y-direction of the ink-jet head are formed by the different nozzles.

According to the method and the device according to the preferred embodiments of the present invention, because, in the formation of the alignment film on the substrate, the shift amount in the X-direction of the ink-jet head is set such that the adjacent streams of the droplets that are formed by the movements in the Y-direction of the ink-jet head are formed by the different nozzles, even when the nozzles of the ink-jet heads include a defective nozzle that ejects a droplet of an inappropriate amount, the streams of the droplets of alignment material ejected from the defective nozzle can be prevented from being formed adjacent to each other.

That is, the streams of the droplets of alignment material ejected from the defective nozzle can be formed apart from each other, which can solve the problem of the formation in one spot of the adjacent streams of the droplets of alignment material ejected from the defective nozzle, the problem being explained above in the description of the Background Art. To be specific, in the conventional method and device as explained above in the description of the Background Art, portions of an alignment film that have thicknesses smaller than the other portions, which result in line defects, gather together because of the adjacent streams of the droplets of alignment material ejected from the defective nozzle. In contrast, in the method and device according to the preferred embodiments of the present invention, portions of the alignment film that have thicknesses smaller than the other portions, which result in line defects, do not gather together but are dispersed because of the unadjacent streams of the droplets of alignment material ejected from the defective nozzle. Accordingly, the method and device according to the preferred embodiments of the present invention are capable of preventing the line defects from developing to appear as visible defects 141 in image display of a liquid crystal display panel 140 as shown in Fig. 15.

It is preferable that the shift amount in the X-direction of the ink-jet head that is shifted each time one movement in the Y-direction of the ink-jet head is finished is set to be a length that is obtained by adding a 1/N2 length of the pitch between the nozzles to an N1-time length of the pitch between the nozzles, N1 being a natural number (1, 2, 3 ...) and N2 being a natural number of two or more (2, 3, 4 ... ), and the number of the movements in the Y-direction of the ink-jet head for droplet ejection onto the substrate is set to be N2. Thus, the method and device according to the preferred embodiments of the present invention are capable of making all the adjacent streams join together to be united with ease while the streams of the droplets of alignment material ejected from the defective nozzle are formed apart from each other.

To be more specific, it is preferable that the shift amount in the X-direction of the ink-jet head that is shifted each time one movement in the Y-direction of the ink-jet head is finished is set to be a length that is obtained by adding a quarter length of the pitch between the nozzles to a ten-time length of the pitch between the nozzles, and the number of the movements in the Y-direction of the ink-jet head for droplet ejection onto the substrate is set to be four. Thus, the method and device according to the preferred embodiments of the present invention are capable of making the line defects less noticeable because the streams of the droplets of alignment material ejected from the defective nozzle can be formed apart from each other by the ten-time length of the pitch between the nozzles.

It is preferable that the movements in the Y-direction of the ink-jet head are reciprocating movements with respect to the substrate. Thus, the method and device according to the preferred embodiments of the present invention are capable of reducing the time required for the droplet ejection because a needless movement of the ink-jet head is avoided.

It is preferable that the Y-direction in which the ink-jet head moves relative to the substrate is inclined at a predetermined degree with respect to one side of the substrate. Thus, in preparing a liquid crystal display panel including two substrates on which alignment films each including portions having thicknesses smaller than the other portions are formed, the method and device according to the preferred embodiments of the present invention are capable of making the line defects less noticeable by opposing the two substrates such that their portions having thicknesses smaller than the other portions intersect with each other than by opposing the two substrates such that their portions having thicknesses smaller than the other portions coincide with each other.

### Advantageous Effects of Invention

According to the method and device according to the preferred embodiments of the present invention, because the portions of the alignment film that have thicknesses smaller than the other portions, which result in line defects, do not gather together but are dispersed because of the unadjacent streams of the droplets of alignment material ejected from the defective nozzle, the line defects can be prevented from developing to appear as visible defects 141 in image display of a liquid crystal display panel 140 as shown in Fig. 15.

### Brief Description of Drawings

Fig. 1 is a view showing a schematic configuration of a device for ejecting droplets of alignment material according to a preferred embodiment of the present invention.
Fig. 2 is a view showing a substrate on which droplets of alignment material are formed that are ejected from ink-jet heads included in the droplet ejection device shown in Fig. 1.
Fig. 3 is a view showing a schematic configuration of a liquid crystal display panel.
Fig. 4 is a view showing the substrate on which first streams of the droplets of alignment material are formed by a first movement of the ink-jet heads shown in Fig. 2.
Fig. 5 is a view showing the substrate on which second streams of the droplets of alignment material are formed by a second movement of the ink-jet heads shown in Fig. 2.
Fig. 6 is a view showing the substrate on which third streams of the droplets of alignment material are formed by a third movement of the ink-jet heads shown in Fig. 2.
Fig. 7 is a view showing the substrate on which fourth streams of the droplets of alignment material are formed by a fourth movement of the ink-jet heads shown in Fig. 2.
Fig. 8 is a view showing a modified embodiment of the present invention where droplets of alignment material that are ejected from ink-jet heads included in the droplet ejection device shown in Fig. 1 are formed on a substrate.
Fig. 9 is a view showing a substrate on which droplets of alignment material are formed that are ejected from conventionally-used ink-jet heads.
Fig. 10 is a view showing the substrate on which first streams of the droplets of alignment material are formed by a first movement of the ink-jet heads shown in Fig. 9.
Fig. 11 is a view showing the substrate on which second streams of the droplets of alignment material are formed by a second movement of the ink-jet heads shown in Fig. 9.
Fig. 12 is a view showing the substrate on which third streams of the droplets of alignment material are formed by a third movement of the ink-jet heads shown in Fig. 9.
Fig. 13 is a view showing the substrate on which fourth streams of the droplets of alignment material are formed by a fourth movement of the ink-jet heads shown in Fig. 9.
Fig. 14 is a view showing the substrate on which the droplets of alignment material are formed that are ejected from the ink-jet heads shown in Fig. 9 in a case where the ink-jet heads include defective nozzles that eject the droplets of inappropriate amounts.
Fig. 15 is a view showing visible defects in image display of a liquid crystal display panel.

### Description of Embodiments

A detailed description of a method and a device for ejecting droplets of alignment material according to preferred embodiments of the present invention will now be provided with reference to the accompanying drawings.

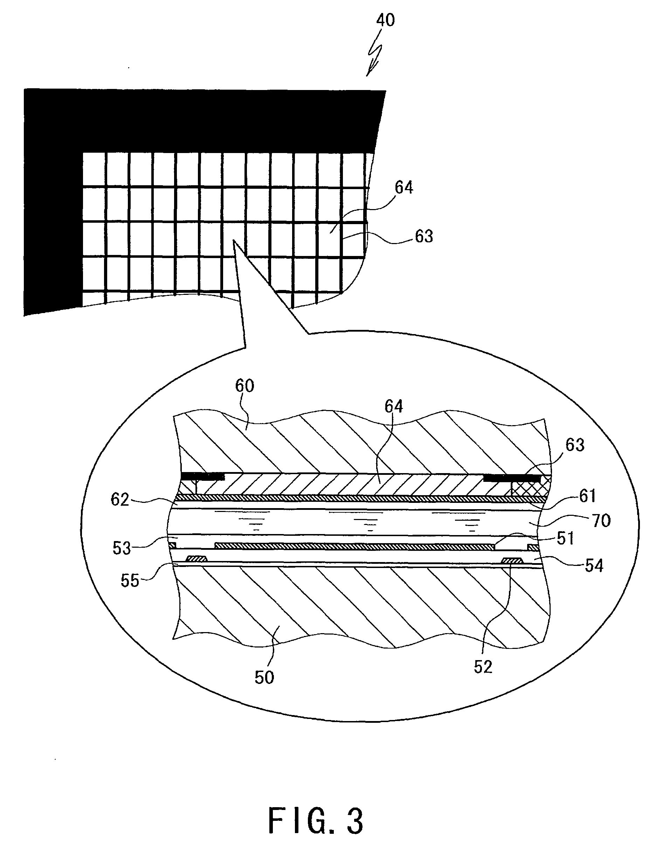

A description of a liquid crystal display panel to which the present invention is applied is provided first. Fig. 3 is a view showing a plan schematic view of a liquid crystal display panel 40, and a sectional schematic view of one pixel of the panel 40. As shown in Fig. 3, the liquid crystal display panel 40 has a configuration such that pixels are arranged in a matrix. As shown in the sectional schematic view of Fig. 3, the liquid crystal display panel 40 includes a pair of a glass substrate (TFT array substrate) 50 and a glass substrate (color filter substrate) 60 that are opposed to each other, between which liquid crystals 70 are filled. Pixel electrodes 51 are each provided to the pixels and are arranged in a matrix on the top surface of the lower glass substrate 50. A common electrode 61 is provided almost entirely on the under surface of the upper glass substrate 60. The pixel electrodes 51 and the common electrode 61 are preferably made of ITO (Indium-Tin Oxide).

Source electrodes 52 and gate electrodes (not shown) are provided perpendicular to each other so as to surround each of the pixel electrodes 51. The source electrodes 52 and the gate electrodes intersect with each other such that the source electrodes 52 lie on the gate electrodes at their intersections with a gate insulator 55 sandwiched therebetween. TFTs (thin film transistors) (not shown) are each provided at the intersections and connected to the pixel electrodes via drain electrodes (not shown). With this configuration, the TFTs are on/off controlled by voltages of scanning signals supplied from the gate electrodes while voltages of image display signals supplied from the source electrodes 52 are applied to the pixel electrodes 51 via the drain electrodes. In addition, the pixel electrodes 51 are each disposed in regions surrounded by the source electrodes 52 and the gate electrodes with an interlayer insulating film 54 sandwiched between the pixel electrodes 51 and the source electrodes 52 and the gate electrodes as shown in Fig. 3.

An alignment film 53 is provided on the glass substrate 50 including the pixel electrodes 51 such that the pixel electrodes 51 are coated with the alignment film 53. An alignment film 62 is provided on the glass substrate 60 including the common electrode 61 such that the common electrode 61 is coated with the alignment film 62. Subjecting these alignment films 53 and 62 to rubbing processing for rubbing surfaces of the alignment films 53 and 62 in a given direction preferably with the use of a silk cloth, or to photo-alignment processing for irradiating surfaces of the alignment films 53 and 62 in a given direction preferably with ultraviolet light provides the surfaces of the alignment films 53 and 62 with predetermined alignment characteristics, which can bring the liquid crystals 70 that are in contact with the alignment films 53 and 62 into alignment. The alignment films 53 and 62 are made from a polyimide.

A black matrix 63 is provided on the glass substrate 60 including the common electrode 61. The black matrix 63 is arranged to shield regions where the source electrodes 52, the gate electrodes and the TFTs are formed from light. Color layers 64 of red (R), green (G) and blue (B) colors are each provided in the pixels.

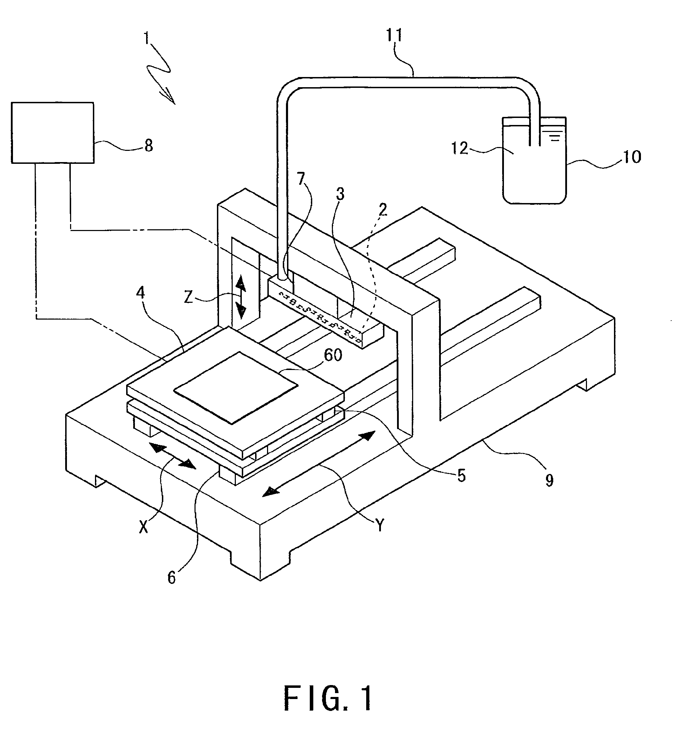

Fig. 1 is a view showing a schematic configuration of a device for ejecting droplets of alignment material that is used in the formation of the alignment film 53 and in the formation of the alignment film 62 on the glass substrate (TFT array substrate) 50 and the glass substrate (color filter substrate) 60 that are included in the liquid crystal display panel 40 having the configuration described above. A description of the formation of the alignment film 62 on the glass substrate (color filter substrate) 60 will be provided. A description of the formation of the alignment film 53 on the glass substrate (TFT array substrate) 50 is omitted because the formation of the alignment film 53 is similar to the formation of the alignment film 62.

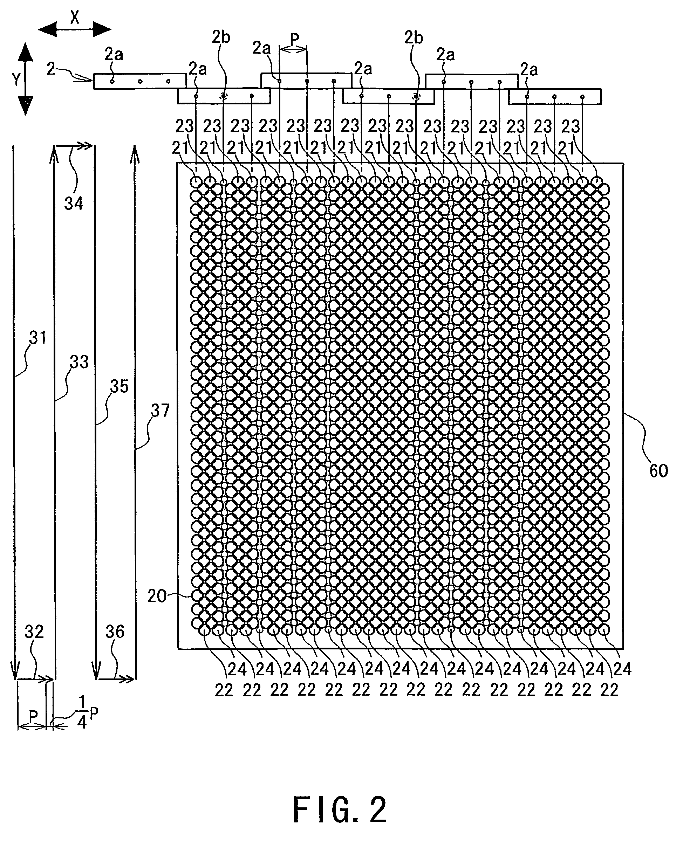

As shown in Fig. 1, a droplet ejection device 1 includes a head-fixing table 3 to which a plurality of ink-jet heads 2 shown in Fig. 2 are fixed on its undersurface, and a substrate stage 4 that allows movement in the X-direction and movement in the Y-direction of the glass substrate 60 relative to the ink-jet heads 2 that are fixed to the head-fixing table 3.

The substrate stage 4 is arranged to support the glass substrate 60 on its top surface such that the glass substrate 60 adheres thereto. Thus, the substrate stage 4 allows the movement in the X-direction and the movement in the Y-direction of the glass substrate 60 relative to the ink-jet heads 2. To be specific, the substrate stage 4 is made movable by a first slider 5 in a direction parallel to a direction in which nozzles 2a of the ink-jet heads 2 are aligned (the X-direction), and made movable by a second slider 6 in a direction perpendicular to the aligned-nozzle direction (the Y-direction). In addition, the device 1 includes a hoisting and lowering mechanism 7 by which the substrate stage 4 is made movable also in a vertical direction (the Z-direction) in order to adjust the distance between the glass substrate 60 and the ink-jet heads 2. The device 1 includes a control unit 8 that controls the movement of the slider 5, the movement of the slider 6 and the movement of the hoisting and lowering mechanism 7, and controls the movement for droplet ejection of the ink-jet heads 2. The device 1 includes a device table 9 on which the substrate stage 4, the sliders 5 and 6, and the hoisting and lowering mechanism 7 are disposed.

The device 1 is arranged such that a solution 12 of alignment film that contains an alignment material (e.g., a solution that contains 5% of a polyimide resin and 95% of a solvent) is fed under pressure from a feed tank 10 into the ink-jet heads 2 provided on the undersurface of the head-fixing table 3 via a feed pipe 11.

The ink-jet heads 2 are arranged staggered along the X-direction on the undersurface of the head-fixing table 3 as shown in Fig. 2. Each ink-jet head 2 includes the nozzles 2a that are aligned at a predetermined pitch P along the X-direction. Having this configuration, the ink-jet heads 2 are capable of performing droplet ejection of the alignment material entirely onto the glass substrate 60. Droplets 20 of alignment material ejected entirely onto the glass substrate 60 as shown in Fig. 2 are formed by a droplet ejection method according to the preferred embodiment of the present invention to be described later.

For the sake of simple explanation of the droplet ejection method to be described later, indicated by the arrows 31 to 37 shown in Figs. 2, 4 to 7 are the moving directions of the ink-jet heads 2 relative to the glass substrate 60, while the device 1 actually has the configuration that the movement of the first slider 5 and the movement of the second slider 6 move the glass substrate 60 supported by the substrate stage 4 in the X- and Y-directions relative to the ink-jet heads 2 that are fixed to a middle portion of the device table 9 of the device 1 as shown in Fig. 1.

The nozzles 2a of the ink-jet heads 2 each include piezoelectric elements (not shown). Thus, any of the nozzles 2a can be chosen based on control signals from the control unit 8, so that the droplets 20 of alignment material can be ejected from the chosen nozzles 2a. While the ink-jet heads 2 are moved in the Y-direction (indicated by the arrows 31, 33, 35 and 37) on the glass substrate 60 by the movement of the second slider 6, the droplets 20 of alignment material are ejected in succession from the nozzles 2a as shown in Figs. 2, 4 to 7.

The ejection of each nozzle 2a is controlled by the control unit 8 such that each nozzle 2a starts the ejection when each nozzle 2a enters an area on the glass substrate 60 within which the droplets 20 should be ejected. The first slider 5 is controlled by the control unit 8 to shift the ink-jet heads 2 in the X-direction (indicated by the arrows 32, 34 and 36) by a predetermined shift amount each time one movement in the Y-direction (indicated by the arrows 31, 33 and 35) of the ink-jet heads 2 relative to the glass substrate 60 is finished. This configuration allows all adjacent streams 21, 22, 23 and 24 of the droplets 20 of alignment material to join together to be united while the streams 21, 22, 23, 24 of the droplets 20 of alignment material ejected from the defective nozzles 2b are formed apart from each other as shown in Fig. 2.

In this preferred embodiment of the present invention, the control unit 8 sets the predetermined shift amount in the X-direction (indicated by the arrows 32, 34 and 36) of the ink-jet heads 2, which are shifted each time one movement in the Y-direction (indicated by the arrows 31, 33 and 35) of the ink-jet heads 2s is finished, to be a length that is obtained by adding a quarter length of the pitch P between the nozzles 2a to a one-time length of the pitch P as shown in Fig. 2, for example. In addition, the control unit 8 sets the number of movements in the Y-direction (indicated by the arrows 31, 33, 35 and 37) of the ink-jet heads 2 for droplet ejection onto the glass substrate 60 to be four, for example.

As described above, setting the shift amount in the X-direction of the ink-jet heads 2 that are shifted each time one movement in the Y-direction of the ink-jet heads 2 is finished to be a length that is obtained by adding a 1/N2 length of the pitch P between the nozzles 2a to an N1-time length of the pitch P, N1 being a natural number (1, 2, 3 ...) and N2 being a natural number of two or more (2, 3, 4 ...), and setting the number of the movements in the Y-direction of the ink-jet heads 2 for droplet ejection onto the glass substrate 60 to be N2 allow the joining and unity of all the adjacent streams 21, 22, 23, 24 of the droplets 20 of alignment material.

In this preferred embodiment of the present invention, a description of the case where N1, based on which the length of the shift amount in the X-direction of the ink-jet heads 2 is decided, is set to be one, and N2, based on which the number of the movements in the Y-direction of the ink-jet heads 2 is decided, is set to be four will be provided for the sake of simplification of the drawings used for a description of the droplet ejection method. N1 is preferably set to be one to twenty, and N2 is preferably set to be two to four. N1 is more preferably set to be ten, and N2 is more preferably set to be four. That is, it is more preferable that the shift amount in the X-direction of the ink-jet heads 2 that are shifted each time one movement in the Y-direction of the ink-jet heads 2 is finished is set to be a length that is obtained by adding a quarter length of the pitch P between the nozzles 2a to a ten-time length of the pitch P, and the number of the movements (the number of the scans) in the Y-direction of the ink-jet heads 2 for droplet ejection onto the glass substrate 60 is set to be four.

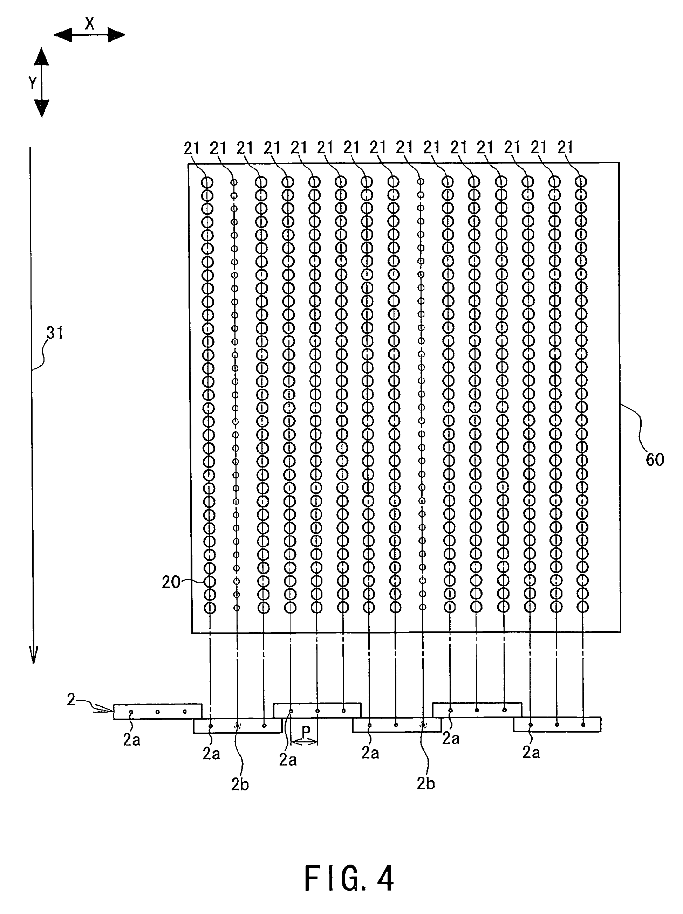

Next, a description of the process for forming the alignment film by ejecting the droplets 20 of alignment material onto the glass substrate 60 with the use of the droplet ejection device 1 as described above will be provided with reference to Figs. 4 to 7.

First, as shown in Fig. 4, a first movement in the Y-direction of the ink-jet heads 2 is made downward, which is indicated by the arrow 31, and the continuous droplets 20 of alignment material form first streams 21 in the Y-direction on the glass substrate 60.

In this process, the center nozzle of the ink-jet head 2 that is disposed second from the left is a defective nozzle 2b (circled with a dotted line in Fig. 4) that ejects droplets 20 of inappropriate amounts due to clogging or some other factors.

In addition, the right nozzle in the ink-jet head 2 that is disposed fourth from the left is a defective nozzle 2b (circled with a dotted line in Fig. 4) that ejects the droplets 20 of inappropriate amounts. Thus, the droplets 20 of the first streams 21 that are ejected from the defective nozzles 2b are smaller than the other droplets 20.

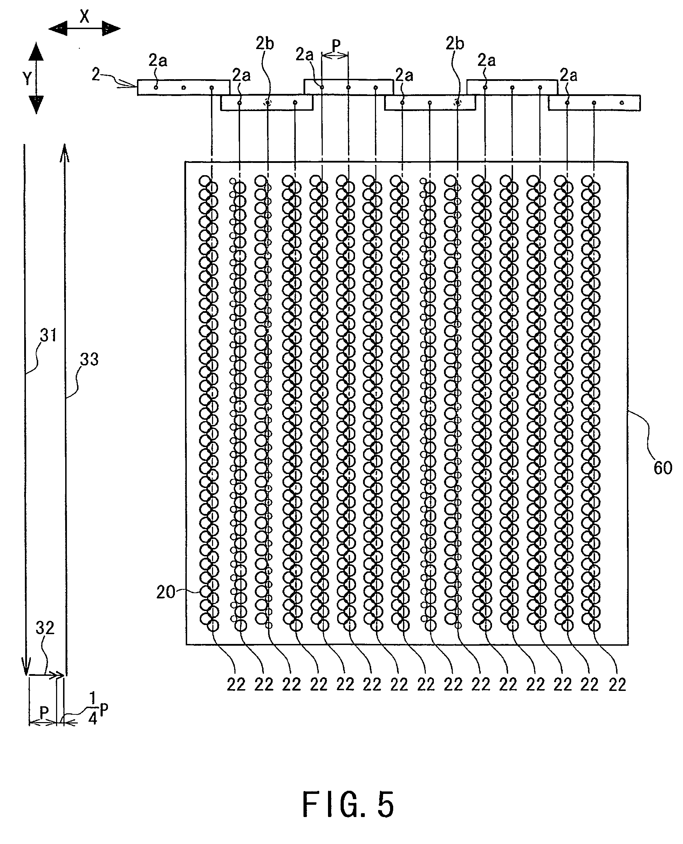

Then, as shown in Fig. 5, after the ink-jet heads 2 are shifted rightward in the X-direction by the length that is obtained by adding the quarter length of the pitch P between the nozzles 2a (quarter pitch) to the length of the pitch P, which is indicated by the arrow 32, a second movement in the Y-direction of the ink-jet heads 2 is made upward, which is indicated by the arrow 33, and the droplets 20 of alignment material form second streams 22 on the glass substrate 60.

During the formation of the second streams 22, as shown in Fig. 5, the second stream 22 of the droplets 20 ejected from the center defective nozzle 2b of the ink-jet head 2 second from the left is formed adjacent to the first stream 21 of the droplets 20 of appropriate droplet amounts ejected from the right nozzle 2a of the ink-jet head 2 second from the left that has been formed by the first movement downward in the Y-direction of the ink-jet head 2, which is indicated by the arrow 31.

In addition, the second stream 22 of the droplets 20 ejected from the right defective nozzle 2b of the ink-jet head 2 fourth from the left is formed adjacent to the first stream 21 of the droplets 20 of appropriate droplet amounts ejected from the left nozzle 2a of the ink-jet head 2 fifth from the left that has been formed by the first movement downward in the Y-direction of the ink-jet head 2, which is indicated by the arrow 31.

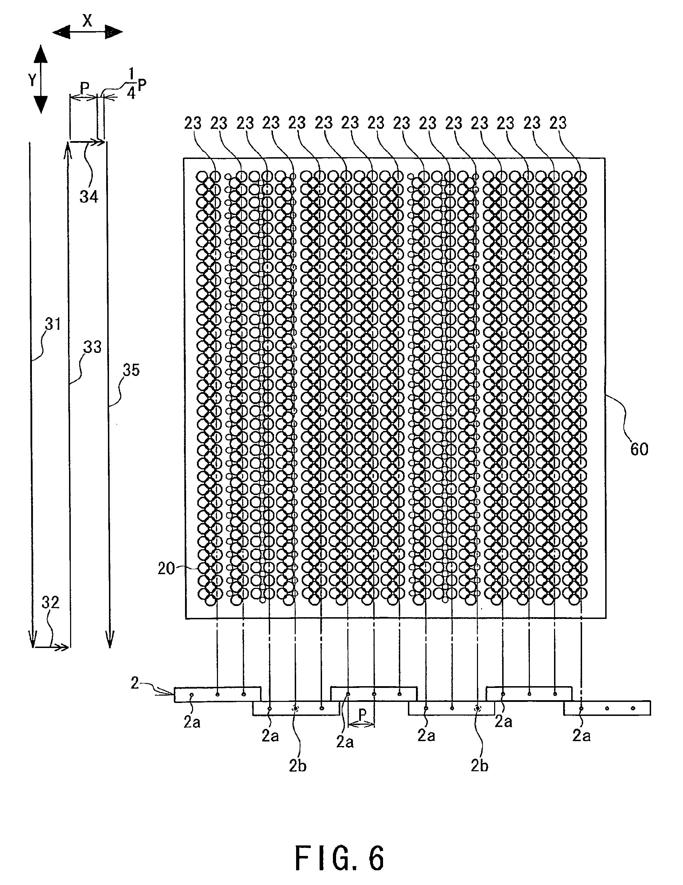

Then, as shown in Fig. 6, after the ink-jet heads 2 are shifted rightward in the X-direction by the length that is obtained by adding the quarter length of the pitch P between the nozzles 2a (quarter pitch) to the length of the pitch P, which is indicated by the arrow 34, a third movement in the Y-direction of the ink-jet heads 2 is made downward, which is indicated by the arrow 35, and the droplets 20 of alignment material form third streams 23 on the glass substrate 60.

During the formation of the third streams 23, as shown in Fig. 6, the third stream 23 of the droplets 20 ejected from the center defective nozzle 2b of the ink-jet head 2 second from the left is formed adjacent to the second stream 22 of the droplets 20 of appropriate droplet amounts ejected from the right nozzle 2a of the ink-jet head 2 second from the left that has been formed by the second movement upward in the Y-direction of the ink-jet head 2, which is indicated by the arrow 33.

In addition, the third stream 23 of the droplets 20 ejected from the right defective nozzle 2b of the ink-jet head 2 fourth from the left is formed adjacent to the second stream 22 of the droplets 20 of appropriate droplet amounts ejected from the left nozzle 2a of the ink-jet head 2 fifth from the left that has been formed by the second movement upward in the Y-direction of the ink-jet head 2, which is indicated by the arrow 33.

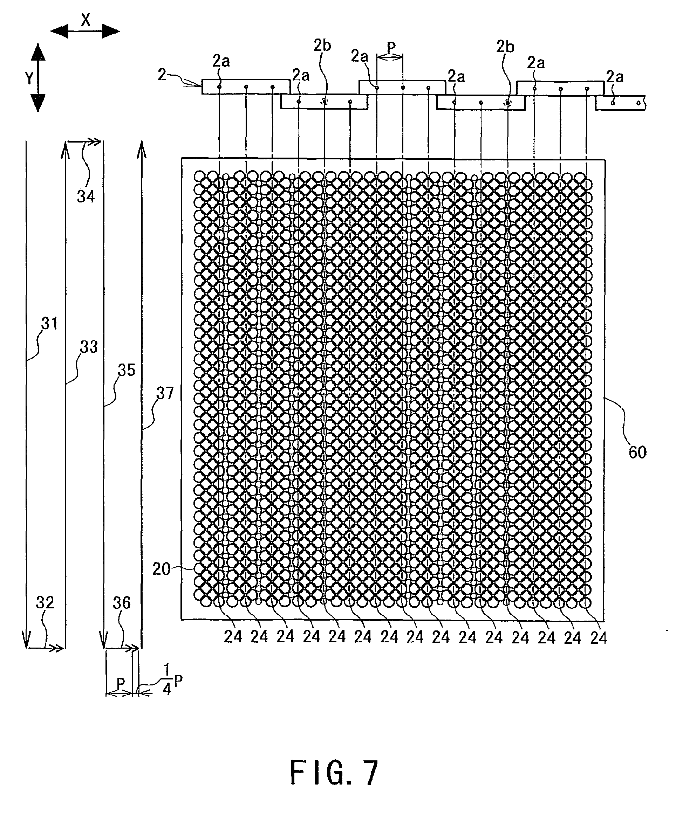

Then, as shown in Fig. 7, after the ink-jet heads 2 are shifted rightward in the X-direction by the length that is obtained by adding the quarter length of the pitch P between the nozzles 2a (quarter pitch) to the length of the pitch P, which is indicated by the arrow 36, a fourth movement in the Y-direction of the ink-jet heads 2 is made upward, which is indicated by the arrow 37, and the droplets 20 of alignment material form fourth streams 24 on the glass substrate 60.

During the formation of the fourth streams 24, as shown in Fig. 7, the fourth stream 24 of the droplets 20 ejected from the center defective nozzle 2b of the ink-jet head 2 second from the left is formed adjacent to the third stream 23 of the droplets 20 of appropriate droplet amounts ejected from the right nozzle 2a of the ink-jet head 2 second from the left that has been formed by the third movement downward in the Y-direction of the ink-jet head 2, which is indicated by the arrow 35.

In addition, the fourth stream 24 of the droplets 20 ejected from the right defective nozzle 2b of the ink-jet head 2 fourth from the left is formed adjacent to the third stream 23 of the droplets 20 of appropriate droplet amounts ejected from the left nozzle 2a of the ink-jet head 2 fifth from the left that has been formed by the third movement downward in the Y-direction of the ink-jet head 2, which is indicated by the arrow 35.

All the formed adjacent streams 21, 22, 23 and 24 of the ejected droplets 20 of alignment material spread to join together on the glass substrate 60, whereby the droplets 20 are united on the glass substrate 60 and take the form of a single thin film in which the alignment material is uniformly spread on the glass substrate 60. Then, the droplets 20 undergo a predetermined process such as a drying process to remove a solvent or substance other than the alignment material contained in the droplets 20. Thus, the alignment film 62 having a given thickness is formed on the glass substrate 60.

When all the first, second, third and fourth streams 21, 22, 23 and 24 of the droplets 20 spread to join together, the alignment materials contained in the first, second, third and fourth streams 21, 22, 23 and 24 of the droplets 20 that are ejected from the defective nozzles 2b as described above are completed with the alignment materials contained in the adjacent streams of the droplets 20 that are ejected from the nozzles 2a that eject the droplets 20 of appropriate droplet amounts. Thus, the amounts of the alignment materials contained in all the streams can be made uniform.

In a conventional droplet ejection method, streams of droplets of alignment material that are ejected from a defective nozzle are formed adjacent to each other in one spot. In addition, when all the streams of the droplets spread to join together, the alignment materials contained in the streams of the droplets that are ejected from the defective nozzle are not completed with the alignment materials contained in the adjacent streams of the droplets of appropriate droplet amounts. Thus, the amounts of the alignment materials contained in all the streams cannot be made uniform.

In other words, as shown in Fig. 14, in the conventional droplet ejection method, portions of an alignment film that have thicknesses smaller than the other portions, which result in line defects, gather together because of adjacent streams 111, 112, 113 and 114 of droplets 110 of alignment material ejected from defective nozzles 100b. In contrast, as shown in Fig. 2, in the droplet ejection method according to the preferred embodiment of the present invention, portions of the alignment film that have thicknesses smaller than the other portions, which result in line defects, do not gather together but are dispersed because of the unadjacent streams 21, 22, 23 and 24 of the droplets 20 of alignment material ejected from the defective nozzles 2b.

Accordingly, the droplet ejection method according to the preferred embodiment of the present invention is capable of preventing the line defects from developing to appear as visible defects 141 in image display of a liquid crystal display panel 140 as shown in Fig. 15.

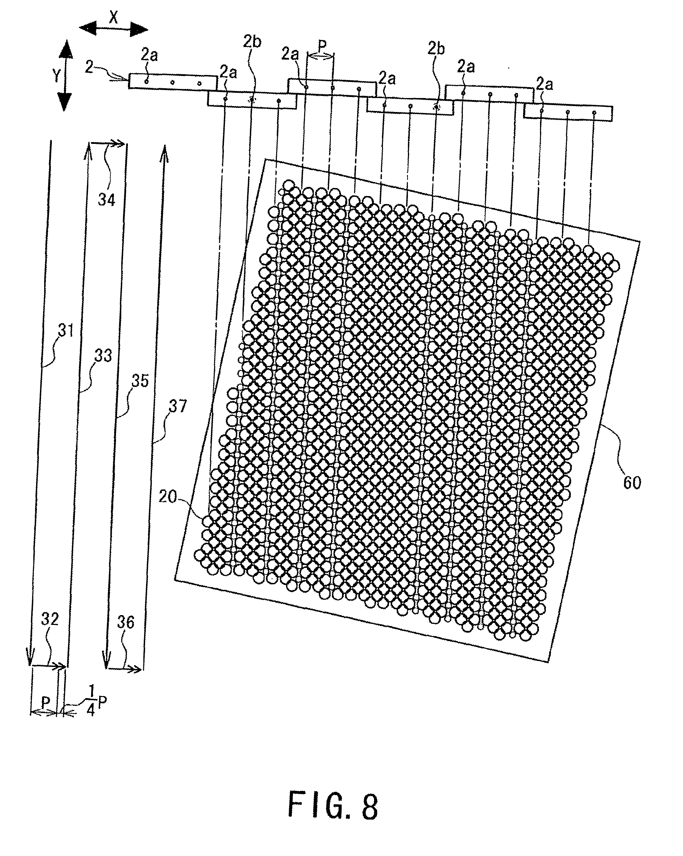

Fig. 8 is a view showing a modified embodiment of the droplet ejection method described above. In the modified embodiment, the Y-direction in which the ink-jet heads 2 move relative to the glass substrate 60 is inclined at a predetermined degree with respect to one side of the glass substrate 60. To be specific, the Y-direction (scanning direction) in which the ink-jet heads 2 move relative to the glass substrate 60 for droplet ejection is inclined at the predetermined degree with respect to a direction in which the pixels are aligned on the glass substrate 60. Because the direction in which the portions of the alignment film that have thicknesses smaller than the other portions are formed do not coincide with the direction in which the pixels are aligned on the glass substrate 60, the portions can be prevented from appearing as line defects.

Further, in preparing the liquid crystal display panel 40 including the two glass substrates 50 and 60 on which the alignment films 53 and 62 each including the portions having thicknesses smaller than the other portions are formed, the line defects can be made less noticeable by opposing the two glass substrates 50 and 60 such that their portions having thicknesses smaller than the other portions intersect with each other than by opposing the two glass substrates 50 and 60 such that their portions having thicknesses smaller than the other portions coincide with each other.

According to the droplet ejection method and device according to the preferred embodiments of the present invention described above, because, in the formation of the alignment film 62 on the glass substrate 60, the shift amount in the X-direction of the ink-jet heads 2 is set such that the adjacent streams 21, 22, 23 and 24 of the droplets 20 of the alignment material that are formed by the movements in the Y-direction of the ink-jet heads 2 are formed by the different nozzles 2a, even when the nozzles 2a of the ink-jet heads 2 include the defective nozzles 2b that eject the droplets 20 of inappropriate amounts, the streams 21, 22, 23 and 24 of the droplets 20 of the alignment material ejected from the defective nozzles 2b can be prevented from being formed adjacent to each other.

That is, the streams 21, 22, 23 and 24 of the droplets 20 of the alignment material ejected from the defective nozzles 2b can be formed apart from each other, which can solve the problem of the formation in one spot of the adjacent streams 111, 112, 113 and 114 of the droplets 110 of alignment material ejected from the defective nozzles 100b, which is explained above in the description of the Background Art. To be specific, in the conventional method and device as explained above in the description of the Background Art, the portions of the alignment film that have thicknesses smaller than the other portions, which result in line defects, gather together because of the adjacent streams 111, 112, 113 and 114 of the droplets 110 of alignment material ejected from the defective nozzles 100b. In contrast, in the method and device according to the preferred embodiments of the present invention, the portions of the alignment film that have thicknesses smaller than the other portions, which result in line defects, do not gather together but are dispersed because of the unadjacent streams 21, 22, 23 and 24 of the droplets 20 of alignment material ejected from the defective nozzles 2b. Accordingly, the method and device according to the preferred embodiments of the present invention are capable of preventing the line defects from developing to appear as visible defects 141 in image display of a liquid crystal display panel 140 as shown in Fig. 15.

If the shift amount in the X-direction of the ink-jet heads 2 that are shifted each time one movement in the Y-direction of the ink-jet heads 2 is finished is set to be the length that is obtained by adding the 1/N2 length (N2 being a natural number of two or more) of the pitch P between the nozzles 2a to the N1-time length (N1 being a natural number) of the pitch P between the nozzles 2a, and the number of the movements in the Y-direction of the ink-jet heads 2 for droplet ejection onto the glass substrate 60 is set to be N2, all the adjacent streams 21, 22, 23 and 24 of the droplets 20 of alignment material can be made to join together to be united while the streams 21, 22, 23 and 24 of the droplets 20 of alignment material ejected from the defective nozzles 2b are formed apart from each other.

To be more specific, if the shift amount in the X-direction of the ink-jet heads 2 that are shifted each time one movement in the Y-direction of the ink-jet heads 2 is finished is set to be the length that is obtained by adding the quarter length of the pitch P between the nozzles 2a to the ten-time length of the pitch P between the nozzles 2a, and the number of the movements in the Y-direction of the ink-jet heads 2 for droplet ejection onto the glass substrate 60 is set to be four, the line defects can be made less noticeable because the streams 21, 22, 23 and 24 of the droplets 20 of alignment material ejected from the defective nozzles 2b are formed apart from each other by the ten-time length of the pitch P between the nozzles 2a.

If the movements in the Y-direction of the ink-jet heads 2 are reciprocating movements with respect to the glass substrate 60, the time required for the droplet ejection can be reduced because a needless movement of the ink-jet heads 2 is avoided.

If the Y-direction in which the ink-jet heads 2 move relative to the glass substrate 60 is inclined at the predetermined degree with respect to one side of the glass substrate 60, in preparing the liquid crystal display panel 40 including the two glass substrates 50 and 60 on which the alignment films 53 and 62 each including the portions having thicknesses smaller than the other portions are formed, the line defects can be made less noticeable by opposing the two glass substrates 50 and 60 such that their portions having thicknesses smaller than the other portions intersect with each other than by opposing the two glass substrates 50 and 60 such that their portions having thicknesses smaller than the other portions coincide with each other.

The foregoing descriptions of the preferred embodiments of the present invention have been presented for purposes of illustration and description with reference to the drawings. However, it is not intended to limit the present invention to the preferred embodiments, and modifications and variations are possible as long as they do not deviate from the principles of the present invention.

For example, it is also preferable that the shift amount in the X-direction of the ink-jet heads 2 that are shifted each time one movement in the Y-direction of the ink-jet heads 2 is finished is changed for every movement in the Y-direction of the ink-jet heads 2. To be specific, the first movement in the Y-direction of the ink-jet heads 2 is made downward, and the ink-jet heads 2 are shifted rightward in the X-direction by a length that is obtained by adding a quarter length of the pitch P to a one-time length of the pitch P. Then, the second movement in the Y-direction of the ink-jet heads 2 is made upward, and the ink-jet heads 2 are shifted rightward in the X-direction by a length that is obtained by adding a quarter length of the pitch P to a two-time length of the pitch P. Then, the third movement in the Y-direction of the ink-jet heads 2 is made downward, and the ink-jet heads 2 are shifted rightward in the X-direction by a length that is obtained by adding a quarter length of the pitch P to a three-time length of the pitch P. Lastly, the fourth movement in the Y-direction of the ink-jet heads 2 is made upward.

The shifts in the X-direction of the ink-jet heads 2 are not limited to the rightward shifts. It is also preferable that the shifts in the X-direction of the ink-jet heads 2 include a leftward shift in the X-direction of the ink-jet heads 2.

## Claims

1. A method for ejecting droplets of material for liquid crystal alignment onto a substrate for a liquid crystal display panel having a square or rectangular shape from nozzles of an ink-jet head while moving the ink-jet head in a Y-direction with respect to the substrate, and forming thereby an alignment film on the substrate, wherein the nozzles are aligned at a predetermined pitch along an X-direction of the ink-jet head, wherein the Y-direction defines a moving direction of the ink-jet head for droplet ejection and the X-direction defines a direction perpendicular to the moving direction,
the method comprising the steps of:
forming streams of the droplets of alignment material on the substrate by a movement in the Y-direction of the ink-jet head;
shifting the ink-jet head in the X-direction by a predetermined shift amount;
forming streams of the droplets of alignment material on the substrate by a movement in the Y-direction of the shifted ink-jet head such that gaps between the streams formed by the preceding movement are filled;
repeating shifting the ink-jet head in the X-direction by the predetermined shift amount, and forming streams of the droplets of alignment material on the substrate by a movement in the Y-direction of the shifted ink-jet head such that gaps between the streams formed by the preceding movements in the Y-direction of the ink-jet head are filled; and
forming thereby the alignment film on the substrate,
wherein the shift amount in the X-direction of the ink-jet head is set such that the adjacent streams of the droplets that are formed by the movements in the Y-direction of the ink-jet head are formed by the different nozzles.

2. The method according to claim 1, wherein
the shift amount in the X-direction of the ink-jet head that is shifted each time one movement in the Y-direction of the ink-jet head is finished is set to be a length that is obtained by adding a 1/N2 length of the pitch between the nozzles to an N1-time length of the pitch between the nozzles, N1 being a natural number and N2 being a natural number of two or more, and
the number of the movements in the Y-direction of the ink-jet head for droplet ejection onto the substrate is set to be N2.

3. The method according to claim 1, wherein
the shift amount in the X-direction of the ink-jet head that is shifted each time one movement in the Y-direction of the ink-jet head is finished is set to be a length that is obtained by adding a quarter length of the pitch between the nozzles to a ten-time length of the pitch between the nozzles, and
the number of the movements in the Y-direction of the ink-jet head for droplet ejection onto the substrate is set to be four.

4. The method according to any one of claims 1 to 3, wherein the movements in the Y-direction of the ink-jet head are reciprocating movements with respect to the substrate.

5. The method according to any one of claims 1 to 4, wherein the Y-direction in which the ink-jet head moves relative to the substrate is inclined at a predetermined degree with respect to one side of the substrate.

6. A device for ejecting droplets of material for liquid crystal alignment onto a substrate for a liquid crystal display panel having a square or rectangular shape from nozzles of an ink-jet head while moving the ink-jet head in a Y-direction with respect to the substrate, and forming thereby an alignment film on the substrate, wherein the nozzles are aligned at a predetermined pitch along an X-direction of the ink-jet head, wherein the Y-direction defines a moving direction of the ink-jet head for droplet ejection and the X-direction defines a direction perpendicular to the moving direction,
the device comprising:
a stage arranged to support the substrate;
a moving unit arranged to move the ink-jet head in the X-direction and the Y-direction relatively to the substrate supported by the stage; and
a control unit controlling the moving unit to move the ink-jet head,
wherein the moving unit is arranged
to move the ink-jet head in the Y-direction to form streams of the droplets of alignment material on the substrate,
to shift the ink-jet head in the X-direction by a predetermined shift amount,
to move the shifted ink-jet head in the Y-direction to form streams of the droplets of alignment material on the substrate such that gaps between the streams formed in the preceding movement in the Y-direction of the ink-jet head are filled, and
to repeat shifting the ink-jet head in the X-direction by the predetermined shift amount, and moving the shifted ink-jet head in the Y-direction to form streams of the droplets of alignment material on the substrate such that gaps between the streams formed in the preceding movements in the Y-direction of the ink-jet head are filled, whereby the alignment film is formed on the substrate,
wherein the control unit sets the shift amount in the X-direction of the ink-jet head shifted by the moving unit such that the adjacent streams of the droplets that are formed by the movements in the Y-direction of the ink-jet head are formed by the different nozzles.

7. The device according to claim 6, wherein the control unit sets
the shift amount in the X-direction of the ink-jet head that is shifted each time one movement in the Y-direction of the ink-jet head is finished to be a length that is obtained by adding a 1/N2 length of the pitch between the nozzles to an N1-time length of the pitch between the nozzles, N1 being a natural number and N2 being a natural number of two or more, and
the number of the movements in the Y-direction of the ink-jet head for droplet ejection onto the substrate to be N2.

8. The device according to claim 6, wherein the control unit sets
the shift amount in the X-direction of the ink-jet head that is shifted each time one movement in the Y-direction of the ink-jet head is finished to be a length that is obtained by adding a quarter length of the pitch between the nozzles to a ten-time length of the pitch between the nozzles, and
the number of the movements in the Y-direction of the ink-jet head for droplet ejection onto the substrate to be four.

9. The device according to any one of claims 6 to 8, wherein the control unit controls the ink-jet head to move in the Y-direction in a reciprocating manner with respect to the substrate.

10. The device according to any one of claims 6 to 9, wherein the Y-direction in which the ink-jet head moves relative to the substrate is inclined at a predetermined degree with respect to one side of the substrate.
